# EUROPÄISCHE PATENTSCHRIFT

(11) **EP 2 078 975 B1**
(45) Veröffentlichungstag und Bekanntmachung des Hinweises auf die Patenterteilung: **27.10.2010**
(21) Anmeldenummer: 08022032.0
(22) Anmeldetag: 18.12.2008
(51) Int. Cl.: G02B 23/18, G01C 3/04, G02B 5/04, G02B 27/10

(54) **Binokulares Fernglas mit Entfernungsmesser**
Binoculars with rangefinder
Jumelles binoculaires avec télémètre

(30) Priorität: 08.01.2008 DE 102008003414
(43) Veröffentlichungstag der Anmeldung: 15.07.2009
(73) Patentinhaber: Carl Zeiss Sports Optics GmbH, 35576 Wetzlar (DE)
(72) Erfinder: Heintz, Christof, 61440 Oberursel (DE); Tautz, Volker, 35578 Wetzlar (DE); Mueller, Norbert, 35614 Asslar (DE)
(74) Vertreter: Böhmer, Sabine

(56) Entgegenhaltungen:
- EP-A- 1 298 480
- EP-A- 1 542 052
- DE-A1-102004 054 182
- DE-C1- 19 933 172
- US-A1- 2005 036 129

## Beschreibung

Die Erfindung betrifft ein binokulares Fernglas mit zwei Beobachtungsstrahlengängen und einer Knickbrücke, wobei jeder Beobachtungsstrahlengang in einem zugeordneten Tubus angeordnet ist, mit jeweils einem Abbe-König-Prismensystem zur Bildumkehr des jeweiligen visuellen Beobachtungsstrahlengangs, wobei das jeweilige Abbe-König-Prismensystem aus einem Gleichschenkelprisma und einem Dachkantprisma besteht.

Für Ferngläser ist aus der DD 285646, der DD 288468 und der DE 800438 die Verwendung von Porro-Prismen 2. Art bekannt. DE 944223 B offenbart ein Porro-ähnliches Prisma. DE 19933172 C1 offenbart die Verwendung eines Uppendahl-Prismas. Weitere Ferngläser mit Entfernungsmesser sind in US2005/0036129A1, EP1298480A1, EP1542052A1 und DE102004054182A1 offenbart. DE19933172C1 offenbart ein Prismensystem zur Bildumkehr in einem visuellen Beobachtungsstrahlengang,

In verschiedenen optischen Systemen, insbesondere Ferngläsern, ist die Verwendung eines Abbe-König-Prismensystems bekannt, so beispielsweise im Zeiss Victory 8x40 B T*.

Ein Abbe-König-Prismensystem ist ein Reflexionsprismensystem, durch das ein Bild aufgerichtet wird. Es erfolgt sowohl eine Höhen- als auch eine Seitenvertauschung. Es besteht aus zwei Prismen, die miteinander verkittet oder mit einem kleinen Abstand nacheinander angeordnet sind. Durch die beiden Prismen kann ein Achsversatz bewirkt werden. Die optische Achse des Eintrittsstrahls beim Eintritt in das Abbe-König-Prismensystem liegt parallel zur optischen Achse des Austrittsstrahls aus dem Abbe-König-Prismensystem. Die Größe des Versatzes beträgt beim Einsatz in Ferngläsern typischerweise 4 bis 9 mm. Sie kann im Optikdesign auf einen gewünschten Wert optimiert werden, z.B. zwischen 0 und 10 mm.

Bisher wurde es aufgrund des knappen Bauraums eines modernen schlanken Fernglases mit Abbe-König-Prismensystemen und Knickbrücke vermieden, ein Lichtbündel, insbesondere ein Laserlichtbündel, aus- oder einzukoppeln.

Es stellt sich nun die Aufgabe, eine kompakte Integration eines Laserentfernungsmessers in ein Fernglas mit Knickbrücke unter Einsatz von Abbe-König-Prismensystemen zu ermöglichen.

Die Lösung der Aufgabe wird durch ein binokulares Fernglas nach Anspruch 1 erlangt.

Dieses binokulare Fernglas weist Abbe-König-Prismensysteme zur Bildumkehr der visuellen Beobachtungsstrahlengänge auf. Das jeweilige Abbe-König-Prismensystem besteht aus einem

Gleichschenkelprisma und einem mit diesem verkitteten oder in einem kleinen Abstand danach angeordneten Dachkantprisma. Der Abstand kann typischerweise 0 bis 5 mm, vorzugsweise 0,5 bis 2 mm betragen. Es sind ein Lasersender und ein Laserempfänger vorgesehen, wobei der Lasersender dem ersten Beobachtungsstrahlengang und der Laserempfänger dem zweiten Beobachtungsstrahlengang zugeordnet ist, und wobei eines der beiden Prismen des jeweiligen Abbe-König-Prismensystems mit einer Teilerschicht ausgebildet oder über eine Kittschicht verbunden ist, wodurch im jeweiligen Tubus eine Aufspaltung von visuellem Beobachtungsstrahlengang und Laserstrahlengang erfolgt.

Die Knickbrücke sichert die Möglichkeit, den Abstand der optischen Achsen der Okulare auf den jeweiligen Augenabstand des Benutzers einzustellen.

Bisher waren binokulare Ferngläser mit Laserentfernungsmesser in starren Gehäusen derart angeordnet, dass die optischen Achsen der beiden Beobachtungsstrahlengänge in festem Abstand zueinander angeordnet waren. Dadurch konnten Sender und Empfänger des Laserentfernungsmessers mit geringem Aufwand und daher sehr preiswert stabil zueinander ausgerichtet werden. Nachteilig hieran war, dass zur Einstellung des Augenabstandes zusätzliche Prismen vor separat zueinander beweglichen Okularen einzubauen waren. Dies führte zu einem unhandlichen Aufbau des Fernglases.

Bei dem erfindungsgemäßen binokularen Fernglas mit Knickbrücke wird dieser Nachteil nun derart überwunden, dass der Lasersender in der einen Fernglashälfte und der Laserempfänger in der anderen Fernglashälfte angeordnet ist, wobei der Abstand der beiden Beobachtungsstrahlengänge zur Einstellung des Augenabstandes über die Knickbrücke variiert werden kann. Die aufgrund der benötigten geringeren Toleranzen höheren Kosten werden dabei durch die gefälligere Handhabung aufgewogen.

Bei dem erfindungsgemäßen binokularen Fernglas kann die schlanke und geradlinige Gehäuseform beibehalten werden, und es besteht die Möglichkeit, bei äußerlich annähernd gleicher Form eine Femglasreihe mit und eine ohne Laserentfernungsmesser vorzusehen.

Das Gleichschenkelprisma zeichnet sich dadurch aus, dass als optisch wirksame Flächen eine Eintritts-, eine Austritts- und eine Reflexionsfläche vorgesehen sind. Die der Reflexionsfläche gegenüberliegende Fläche wird als Kopffläche bezeichnet. Diese kann auch optisch wirksam ausgebildet sein. Ein auf der optischen Achse vom Objektiv zum Gleichschenkelprisma verlaufendes Achsstrahlenbündel tritt senkrecht durch die Eintrittsfläche in das Prisma ein, wird an der Reflexionsfläche reflektiert, was eine Höhenvertauschung des Bildes bewirkt, und tritt senkrecht aus der Austrittsfläche des Gleichschenkelprismas aus. Es liegt dann eine totale interne Reflexion (TIR) vor. Die Reflexionsfläche kann auch als Teilerfläche ausgebildet sein, so dass ein Teil eines Strahlenbündels reflektiert und ein anderer Teil transmittiert wird.

Aufgrund von Justagetoleranzen ist es vorstellbar, dass das Achsstrahlenbündel nicht mathematisch exakt senkrecht, sondern nur im Wesentlichen senkrecht, mit z.B. einer Abweichung von ± 2° auftrifft.

In der Fachwelt können solche Gleichschenkelprismen auch als Amici-Prismen bezeichnet werden.

Das Dachkantprisma weist als optisch wirksame Flächen eine Eintrittsfläche, zwei Dachkantreflexionsflächen, eine weitere Reflexionsfläche und eine Austrittsfläche auf.

Ein auf der optischen Achse vom Gleichschenkelprisma zum Dachkantprisma verlaufendes Strahlenbündel tritt senkrecht durch die Dachkantprisma-Eintrittsfläche in das Dachkantprisma ein. Das Strahlenbündel verläuft dann in Richtung der Dachflächen und wird an diesen reflektiert. Durch Reflexionen an den beiden Dachflächen wird eine Seitenvertauschung des Bilds bewirkt. Das reflektierte Strahlenbündel trifft dann auf die weitere Reflexionsfläche auf und wird von dieser zur Austrittsfläche reflektiert. Das Strahlenbündel verlässt dann das Dachkantprisma senkrecht zur Austrittsfläche.

Die Dachkantprisma-Eintrittsfläche und die weitere Reflexionsfläche sind physikalisch ein und dieselbe Prismenfläche, die je nach Auftreffwinkel einmal als Durchtrittsfläche und einmal als Reflexionsfläche wirken.

Innerhalb des Dachkantprismas findet eine totale interne Reflexion (TIR) an den Dachkantflächen und der weiteren Reflexionsfläche statt.

Das aus dem Dachkantprisma austretende Strahlenbündel verläuft dann über eine Zwischenbildebene zum Okular.

Es kann vorgesehen sein, dass im Dachkantprisma eine Strahlteilerfläche ausgebildet ist. Nachdem das Strahlenbündel an der weiteren Reflexionsfläche reflektiert wurde, kann es je nach Wellenlängenbereich durch die Strahlteilerfläche hindurch zur Austrittsfläche dringen, oder es wird wiederum an der Strahlteilerfläche reflektiert und zu einer separaten Austrittsfläche geführt, durch welche der Strahl bevorzugt im Wesentlichen senkrecht austritt. Die separate Austrittsfläche, die Eintrittsfläche und die weitere Reflexionsfläche sind physikalisch ein und dieselbe Prismenfläche (siehe oben).

Als Glassorte für die Prismen kann BK7 oder es können andere geeignete Materialien, z. B. Kunststoffe, Verwendung finden.

Zur Gewichtsreduzierung der Prismen können Facetten angeschliffen sein, um denjenigen Teil des Prismenmaterials zu entfernen, der für den Strahlengang unwichtig ist.

Für die Reflexionsflächen, die nicht als Teilerschicht fungieren, gilt, dass sie mit einer dielektrischen Schicht oder aber einer sonstigen Schicht, z.B. Aluminium- oder Silberschicht verspiegelt sein können. Dies betrifft beispielsweise die Reflexionsflächen 32 und 33.

In den Unteransprüchen sind weitere vorteilhafte Ausführungsformen angegeben.

Beispielhafte Ausführungsformen der Erfindung sind in den Figuren wiedergegeben. Es zeigen
- Figur 1:: schematische Darstellung einer Fernglashälfte mit einer Teilerschicht im Gleichschenkelprisma,
- Figur 2:: eine weitere schematische Darstellung einer Fernglashälfte mit einer Teilerschicht im Gleichschenkelprisma,
- Figur 3:: eine schematische Darstellung einer Fernglashälfte mit einer Teilerschicht im Dachkantprisma,
- Figur 4:: ein Abbe-König-Prismensystem,
- Figur 5:: ein Abbe-König-Prismensystem nach Figur 2, und
- Figur 6:: eine schematische Darstellung eines erfindungsgemäßen binokularen Fernglases.

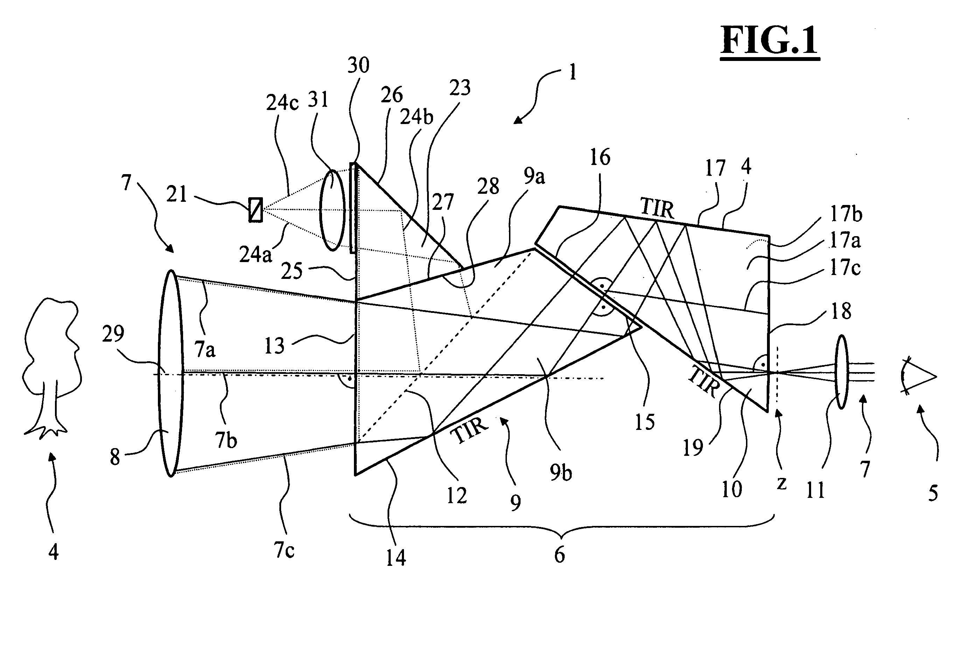

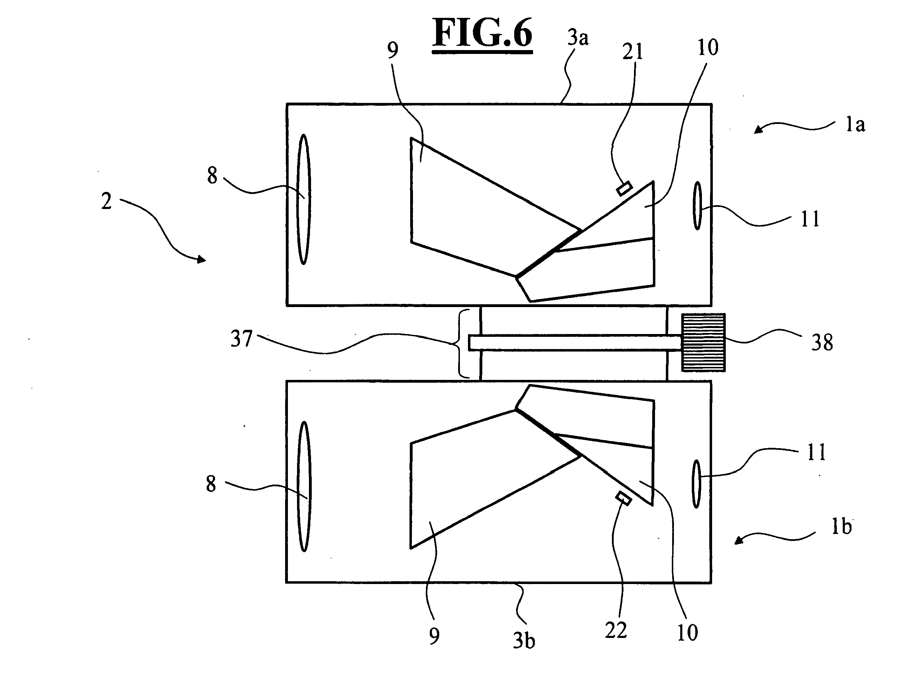

Figur 1 zeigt schematisch eine Fernglashälfte 1 mit Lasersender 21 oder Laserempfänger 22 eines Laserentfernungsmessers vor einem Objekt 4, welches von einem Beobachter 5 durch das in Figur 6 dargestellte Fernglas 2 beobachtet und dessen Entfernung mit dem Laserentfernungsmesser ermittelt werden kann. Das binokulare Fernglas weist in der jeweiligen Fernglashälfte ein Abbe-König-Prismensystem 6 auf.

Zur besseren Übersichtlichkeit wurde auf die Darstellung des Tubusgehäuses verzichtet.

Der Lasersender 21 kann als Laserdiode und der Laserempfänger 22 als Photodiode ausgebildet sein.

Das Objekt 4 ist stilisiert dargestellt und befindet sich bei einer Beobachtung häufig in einer Entfernung von 3 bis 1500 m.

Ein Beobachtungsstrahlengang 7 ist von einem Objektiv 8 durch ein Gleichschenkelprisma 9 und dahinter angeordnetes Dachkantprisma 10 zu einem Okular 11 hin verlaufend als durchgezogene Linien dargestellt. Gleichschenkelprisma 9 und Dachkantprisma 10 stellen das Abbe-König-Prismensystem 6 dar. Von dem Beobachtungsstrahlengang sind die drei Strahlen 7a, 7b und 7c dargestellt. Die durchgezogene Linie im Innern des Dachkantprismas stellt die vordere untere Dachkante 17c dar.

Das aus Sicht des von links einfallenden Lichts erste Prisma 9 besteht aus zwei Teilen 9a und 9b. Die beiden Prismenteile 9a und 9b sind miteinander verkittet. Die gemeinsame Fläche der beiden Prismenteile 9a und 9b ist als Strahlteiler ausgebildet. Bevorzugt wird eine Teilerschicht 12, insbesondere eine dielektrische Teilerschicht, die vor der Verkittung auf eine der beiden zu verkittenden Flächen aufgebracht wird. Diese Teilerschicht 12 ist in Figur 1 als gestrichelte Linie dargestellt.

Die Teilerschicht 12 ist derart ausgebildet, dass der Wellenlängenbereich, in dem eine infrarote Laserdiode arbeitet, inklusive eines Bandes von ca. ± 50 nm, z.B. 850 bis 950 nm, reflektiert wird. Vorstellbar ist auch eine Reflexion ab ca. 800 nm. Eine infrarote Laserdiode kann beispielsweise mit 905, 1060 oder ca. 1500 nm Wellenlänge arbeiten. Die übrigen Wellenlängen, insbesondere der visuell sichtbare Bereich, werden durchgelassen.

Eine optische Achse 29 der Fernglashälfte wird durch das Objektiv 8 definiert und ist strichpunktiert dargestellt.

Nachdem ein Strahlenbündel 7 das Objektiv 8 durchquert hat, tritt es durch die Eintrittsfläche 13 in das Gleichschenkelprisma 9 ein, und der Teil des Strahlenbündels im visuell sichtbaren Wellenlängenbereich durchquert die Teilerschicht 12. Dabei soll die Durchquerung der Teilerschicht derart unbeeinflusst erfolgen, dass kein oder nur ein minimal wahrnehmbarer Farbstich erzeugt wird, z.B. ΔRed < 3 und ΔGreen < 3 nach ISO 14490-5 Annex B Clause B.2. Er trifft anschließend auf die Reflexionsfläche 14 und wird von dieser durch totale interne Reflexion (TIR) zur Austrittsfläche 15 reflektiert. Die Austrittsfläche 15 ist an die Eintrittsfläche 16 des Dachkantprismas 10 gekittet. Alternativ kann zwischen der Austrittsfläche 15 und der Eintrittsfläche 16 ein Luftspalt vorgesehen sein. Das Beobachtungsstrahlenbündel tritt senkrecht durch die Austrittsfläche 15 aus dem Gleichschenkelprisma 9 aus, zur Eintrittsfläche 16 des Dachkantprismas 10 wieder ein und wird anschließend an dem Dachflächenpaar 17a und 17b und an der Reflexionsfläche 19 totalreflektiert, um von dort zur Austrittsfläche 18 und anschließend zum Okular 11 zu gelangen. Dabei entspricht die Eintrittsfläche 16 der Reflexionsfläche 19.

Der von den beiden Dachflächen gebildete Dachfirst, auch Dachkante genannt, ist mit 17 bezeichnet. 17c bezeichnet die untere Kante der Dachfläche 17a. Die Dachfläche 17b sowie deren zugehörige untere Kante wird von der vorderen Dachfläche verdeckt.

Zwischen der Austrittsfläche 18 und dem Okular 11 ist in der Regel eine Zwischenbildebene Z angeordnet.

Die Flächen totaler interner Reflexion sind für die beiden Prismen des Abbe-König-Prismensystems in der **Figur 1** mit TIR bezeichnet.

Im weiteren Verlauf soll nun die Fernglashälfte 1 exemplarisch mit dem Lasersender 21 beschrieben werden. In der hier nicht dargestellten zweiten Fernglashälfte mit dem Lasersender 21 ist der Laserstrahlengang von der Verlaufsrichtung her umgekehrt.

In der vorliegenden Ausführungsform ist zwischen dem Lasersender 21 und dem Gleichschenkelprisma 9 ein Umlenkprisma 23 aufgekittet. Es dient der Strahlfaltung, um den Bauraum besser auszunutzen und eine schlankere Ausführungsform des Fernglases zu ermöglichen. Ein weiterer Vorteil besteht darin, dass der gepunktet dargestellte Laserstrahl durch das Umlenkprisma 23 parallel zur optischen Achse 29 ausgerichtet wird, was ein Justieren des Lasersenders erleichtert.

Es ist sowohl eine Umlenkung nach links - wie in **Figur 1** dargestellt - als auch eine Umlenkung nach rechts vorstellbar.

Der Winkel der Teilerschicht 12 kann derart ausgebildet sein, dass das gesamte Laserstrahlenbündel auf die Reflexionsfläche 26 des Umlenkprismas 23 trifft.

In der vorliegenden Ausführungsform verläuft das Laserstrahlbündel des Lasersenders 21 zum Umlenkprisma 23 und tritt durch dessen erste Durchtrittsfläche 25 ein, wird anschließend an der Reflexionsfläche 26 reflektiert, um dann das Umlenkprisma 23 durch die zweite Durchtrittsfläche 27 zu verlassen. Die Durchtrittsfläche 27 ist mit der Laserdurchtrittsfläche 28 des Gleichschenkelprismas 9 verkittet. Das Laserstrahlbündel tritt durch die Fläche 28 hindurch, wird an der Teilerschicht 12 reflektiert und läuft durch die Durchtrittsfläche 13 und das Objektiv 8 zum Objekt 4 hin. An dem Objekt 4 wird das Laserstrahlbündel 24 reflektiert. Das rücklaufende Laserstrahlbündel wird zum Laserempfänger 22 in dem anderen nicht dargestellten Tubus gelenkt, und dann kann auf bekannte Weise die Entfernung des Objekts 4 bestimmt werden.

Drei Teilstrahlen 24a, 24b und 24c des Laserstrahlenbündels 24 sind in **Figur 1** gestrichelt dargestellt.

Im Bereich der Durchtrittsfläche 25 kann ein Filter 30, z.B. in Form einer Filterschicht, vorgesehen sein. Wahlweise oder ergänzend kann ein solcher Filter auch im Bereich der Verkittung zwischen dem Gleichschenkelprisma 9 und dem Umlenkprisma 23 vorgesehen sein. Durch den Filter 30 können unerwünschte Wellenlängen ausgefiltert werden.

Es kann auch eine Hilfslinse 31 vorgesehen sein. Durch diese Hilfslinse 31 kann der Strahlengang 24 verkürzt werden.

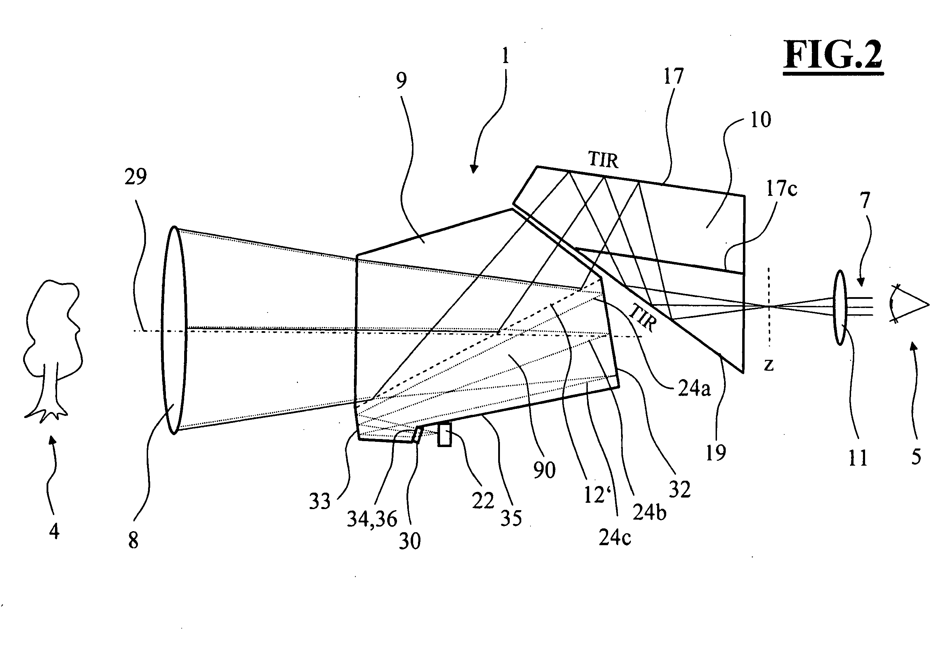

**Figur 2** zeigt eine Fernglashälfte. Diese kann mit einem Laserempfänger oder mit einem Lasersender ausgebildet sein. Im Folgenden wird die Ausführungsform mit einem Laserempfänger beschrieben. Hierbei weist das Gleichschenkelprisma 9 eine Teilerschicht 12' auf.

In **Figur 2** ist die Teilerschicht 12' auf der Unterseite des Gleichschenkelprismas 9 ausgebildet. Als Unterseite wird die Fläche bezeichnet, die bei einem handelsüblichen Gleichschenkelprisma als Totalreflexionsfläche fungiert. Hier ist an diese Fläche ein Umlenkprisma 90 aufgekittet, so dass die vom Objekt 4 reflektierten Laserstrahlen 24 durchgelassen und die übrigen vom Objekt 4 reflektierten Wellenlängen 7, insbesondere die Wellenlängen im sichtbaren Bereich, im Gleichschenkelprisma 9 an der Teilerschicht 12' reflektiert werden. Diese reflektierten Wellenlängen 7 gelangen somit nicht in das Umlenkprisma 90, sondern über das Dachkantprisma 10 und das Okular 11 zum Beobachter 5 hin.

Als Teilerschicht 12' kann eine dielektrische Schicht vorgesehen sein.

Die durchgelassenen Laserstrahlen 24 werden an einer ersten Reflexionsfläche 32 und einer zweiten Reflexionsfläche 33 reflektiert und gelangen so über eine Austrittsfläche 34 und einen optionalen Filter 30 zu dem Laserempfänger 22. Die Reflexionswinkel sind hierbei so gewählt, dass die optische Achse des Laserempfängers 22 parallel zur optischen Achse des Objektivs verläuft, wodurch das Justieren des Laserempfängers 22 erleichtert wird. Es ist auch vorstellbar, nur eine Reflexionsfläche 32 oder mehr als zwei Reflexionsflächen 32 und 33 vorzusehen; hierdurch kann eine mehr oder weniger kompakte Bauform erlangt werden.

Die Laserstrahlen 24 können beispielsweise eine Wellenlänge von 905 nm ±10 nm aufweisen.

Der optionale Filter 30 kann zu dem Zweck vorhanden sein, unerwünschtes Restlicht abzufangen. Dadurch wird verhindert, dass evtl. trotz Teilerschicht noch vorhandene restliche Anteile von Nicht-Laserlicht die Messung stören könnten.

Durch die Ausbildung einer doppelten Reflexion im Umlenkprisma 90 entsteht ein sehr kompakter Strahlengang 24. Die Austrittsfläche 34 wird dabei durch einen schulterförmigen Versatz 36 in der der Teilerschicht gegenüberliegenden Grundfläche 35 geschaffen. Diese Austrittsfläche 34 sollte eine Größe von mindestens 1 mm² aufweisen.

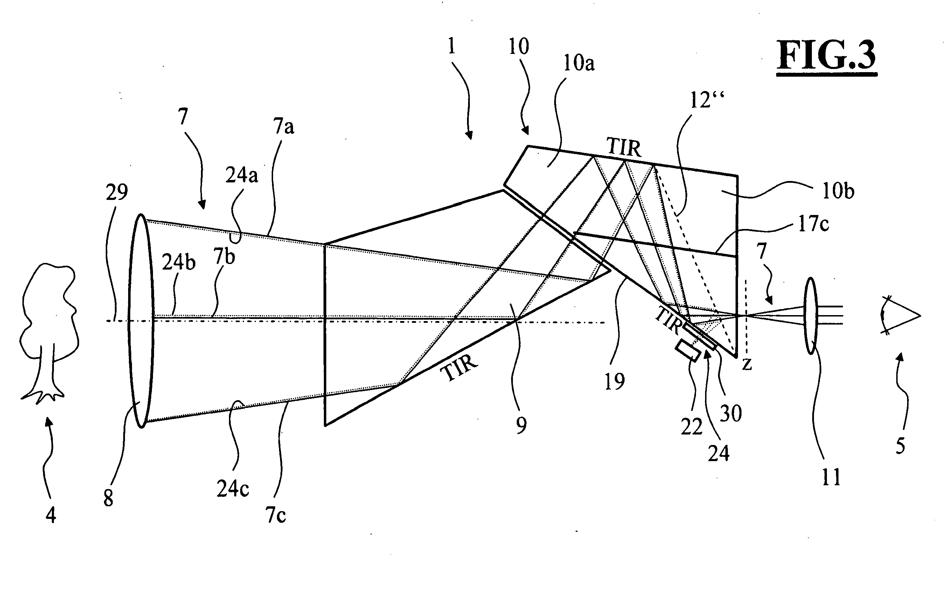

**Figur 3** zeigt eine Fernglashälfte. Diese kann mit einem Laserempfänger oder mit einem Lasersender ausgebildet sein. Im Folgenden wird die Ausführungsform mit einem Laserempfänger 22 beschrieben. Hierbei weist das Dachkantprisma 10 eine Teilerschicht 12" auf.

Das vom beobachteten Objekt 4 reflektierte Licht 7 sowie der Laserstrahl 24 dringen gemeinsam durch das Objektiv 8 und das Gleichschenkelprisma 9 in das Dachkantprisma 10 ein. Die Strahlen werden an der Fläche 19 totalreflektiert, da die Strahlen im Bereich 19 flacher als der Grenzwinkel ε der Totalreflexion auftreffen.

Das Dachkantprisma 10 besteht aus zwei miteinander verkitteten Prismenteilen 10a und 10b. An der Grenzfläche zwischen den beiden Prismenteilen 10a und 10b ist die Teilerschicht 12" angeordnet. Diese Teilerschicht 12" ist derart ausgebildet, dass der Laserstrahl 24 wiederum reflektiert und die übrigen Strahlen 7 durchgelassen werden. Der Laserstrahl 24 tritt dann durch die Fläche 19 aus. Dabei ist der Winkel der austretenden Laserstrahlen 24 derart steil gewählt, dass diesmal für die Laserstrahlen keine totale interne Reflexion auftreten kann. Das heißt, die Fläche 19 wird als Transmissions- und Reflexionsfläche verwendet. Der Laserstrahl durchläuft anschließend einen optionalen Filter 30, mit dem restliches Störlicht ausgefiltert werden kann, und trifft dann auf den Laserempfänger 22.

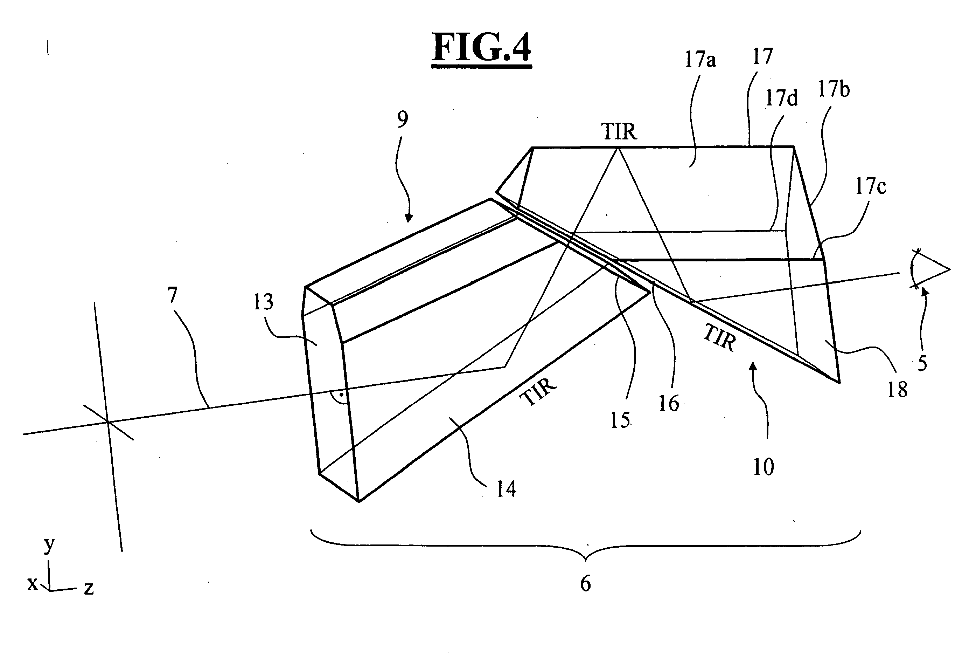

**Figur 4** zeigt ein Abbe-König-Prismensystem 6, bestehend aus einem Gleichschenkelprisma 9 und einem Dachkantprisma 10. Beide Prismen sind mit geringem Abstand zueinander angeordnet. Nur ein schmaler Luftspalt trennt die Austrittsfläche 15 von der Eintrittsfläche 16.

Ein Lichtstrahl 7 tritt auf der optischen Achse durch die Eintrittsfläche 13 in das Gleichschenkelprisma 9 ein, wird dort an der Reflexionsfläche 14 totalreflektiert und verlässt das Gleichschenkelprisma 9 über die Austrittsfläche 15. Über die Eintrittsfläche 16 tritt der Strahl 7 dann in das Dachkantprisma 10 ein. Der Strahl 7 wird zuerst an den Dachflächen 17a und 17b und anschließend an der Reflexionsfläche 16 totalreflektiert und verlässt das Dachkantprisma über die Austrittsfläche 18.

In Abhängigkeit vom Winkel des auftreffenden Strahls 7 fungiert die Fläche 16 als Transmissions- oder als Reflexionsfläche.

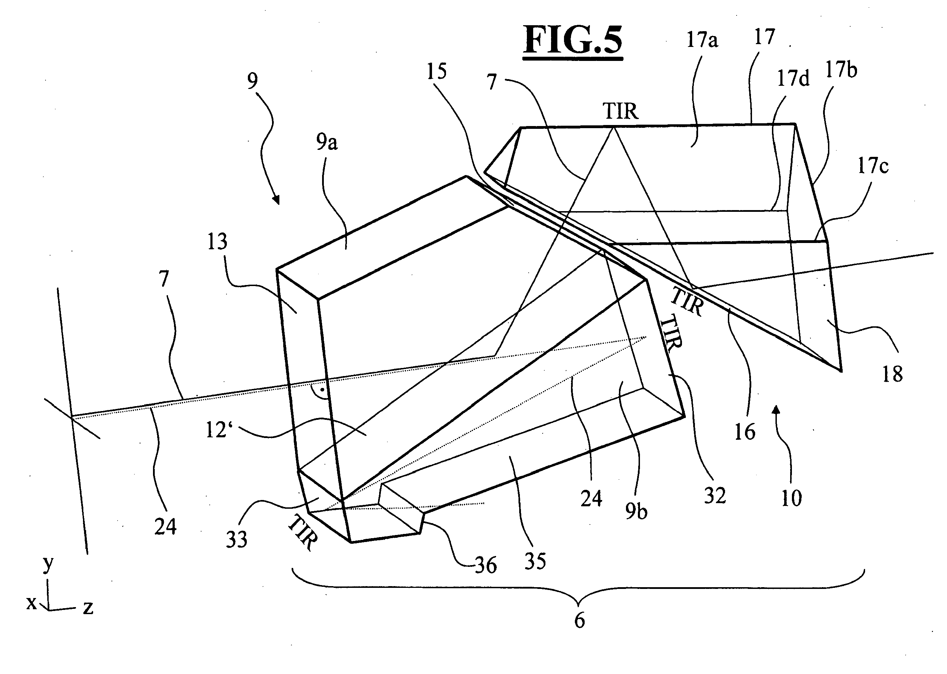

**Figur 5** zeigt ein abgewandeltes Abbe-König-Prismensystem entsprechend der Ausführungsform aus **Figur 2**. Hier ist auf der Unterseite des Gleichschenkelprismas 9 eine Teilerschicht 12' angeordnet, die den Strahl in zwei Teilstrahlen 7 und 24 aufteilt.

**Figur 6** zeigt ein erfindungsgemäßes binokulares Fernglas 2 mit zwei Fernglashälften 1a, 1b und einer Knickbrücke 37. In der ersten Fernglashälfte 1a ist ein Lasersender 21 und in der zweiten Fernglashälfte 1b ein Laserempfänger 22 angeordnet. Lasersender 21 ist dabei innerhalb des Tubus 3a und Laserempfänger 22 innerhalb des Tubus 3b angeordnet.

Die beiden Fernglashälften 1a und 1b sind durch die Knickbrücke 37 verbunden. Dadurch ist der Abstand der Tubusse 3a und 3b zueinander variierbar.

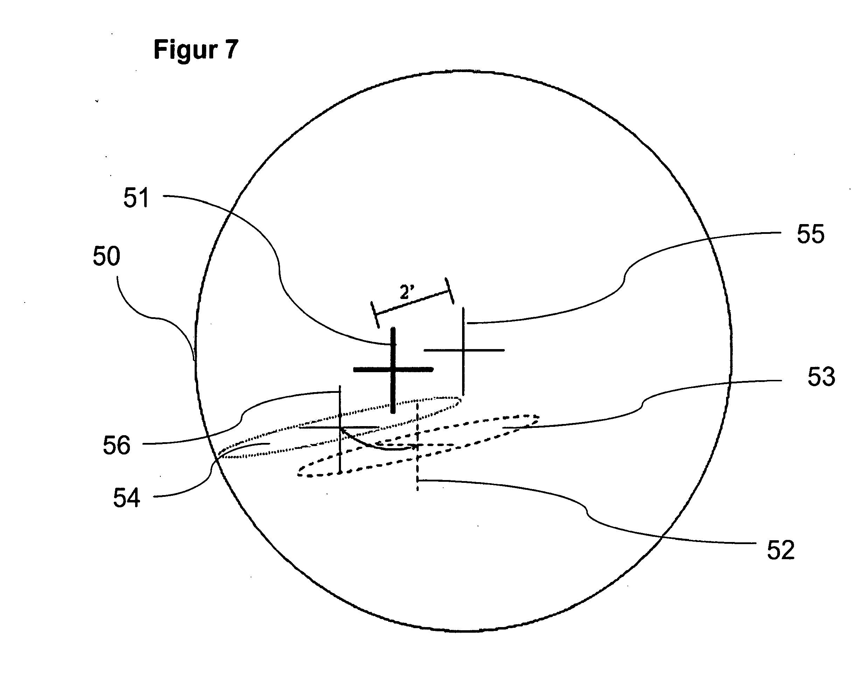

In **Figur 7** ist exemplarisch ein nicht dargestelltes erfindungsgemäßes binokulares Fernglas auf eine weiße Wand, hier durch die weiße Papierfläche dargestellt, gerichtet. Figur 7 zeigt dann das Sehfeld 50 des Laserempfängers 22. Das Sehfeld des Laserempfängers 22 hat beispielsweise 12' Durchmesser in Winkelminuten. Alles Laserlicht, das aus diesem Raumwinkel zurückkommt, trifft auf den Laserempfänger 22. Die mechanische Mittelachse des binokularen Fernglases ist mit 51 dargestellt. Mit 52 ist die Laserstrahlachse des Lasersenders 21 bezeichnet. Mit 53 ist die Fläche des Laserstrahls bezeichnet, der die weiße Wand beleuchtet. Die Längsachse kann dabei beispielsweise 4' bis 6' betragen.

Wird nun bei dem erfindungsgemäßen binokularen Fernglas mit Mittelachse die Empfängerseite 1b und Mittelachse 51 festgehalten und nur die Sendeseite 1a geknickt, bewegt sich der Laserstrahl relativ zum Empfängersehfeld 50. Die mechanische Mittelachse 51 und die Sehfeldachse 55 des Laserempfängers 22 bleiben dabei ortsfest. 54 und 56 bezeichnen beispielsweise die neue Lage des Laserbündels.

Beispielsweise ist eine Justagetoleranz der Ziellinie (Laserstrahlachse) 52 zur mechanischen Mittelachse 51 von ±2' vorgesehen. Das Gleiche für die Achse des Empfangsstrahlengangs 55 zur mechanischen Mittelachse 51. D.h., die beiden Achsen Sender zu Empfänger können für obiges Beispiel nur max. 4' auseinander stehen. Die Empfängerachse 55 ist Mittelpunkt des o.g. Sehfelds 50 von 12' Durchmesser (6' Radius). Von den 6' werden also max. 4' ausgenutzt als Achsabweichung (alle Achsen auf einer Linie). Der Laserfleck selbst hat aber noch einen Durchmesser (langgezogene Ellipse, Orientierung beliebig) von 4' bis6'. In einem ungünstigen Fall, d.h. alle Kreuze liegen auf einer Linie und halber Durchmesser des Laserflecks gilt 2'+2'+3' =7', d.h. 1' von der Ellipse sind außerhalb des großen Kreises.

Es ist vorgesehen, die Präzision, mit der Sende- und Empfangsachse zueinander justiert sind, auf einen Bereich von wenigen Bogenminuten abzustimmen. In einer Ausführungsform beträgt der Bereich < ±10' oder < ±5', insbesondere < ±2'.
Es wird bevorzugt, dass beim Knicken des Fernglases um die Mittelachse mindestens 50%, besser 75%, noch besser >90% des Laserstrahl-Auftreff-Flecks innerhalb des Sehfelds der verwendeten Empfangsdiode von dieser zu "sehen" sind.

### Bezugszeichenliste

| | |
|---|---|
| Fernglashälfte 1a, 1b | erste Durchtrittsfläche 25 |
| Fernglas 2 | Reflexionsfläche 26 |
| Tubus 3a, 3b | zweite Durchtrittsfläche 27 |
| Objekt 4 | Laserdurchtrittsfläche 28 |
| Beobachter 5 | optische Achse 29 |
| Abbe-König-Prismensystem 6 | Filter 30 |
| Beobachtungsstrahlengang/Strahlenbündel 7 | Hilfslinse 31 |
| Objektiv 8 | erste Reflexionsfläche 32 |
| Gleichschenkelprisma 9 | zweite Reflexionsfläche 33 |
| erstes Prismenteil 9a | Laserdurchtrittsfläche 34 |
| zweites Prismenteil 9b | Grundfläche 35 |
| Dachkantprisma 10 | Schulter 36 |
| erstes Prismenteil 10a | Knickbrücke 37 |
| zweites Prismenteil 10b | Mitteltrieb 38 |
| Okular 11 | |
| Teilerschicht 12, 12', 12" | |
| Durchtrittsfläche 13 des Gleichschenkelprismas | |
| Reflexionsfläche 14 | Sehfeld 50 des Laserempfängers 22 |
| Austrittsfläche 15 | mechanische Mittelachse 51 |
| Eintrittsfläche 16 des Dachkantprismas | Laserstrahlachse 52 des Lasersenders 21 |
| Dachfirst ("Dachkante") 17 | Fläche des Laserstrahls 53 |
| erste Dachfläche 17a | Fläche des Laserstrahls in neuer Lage 54 |
| zweite Dachfläche 17b | Sehfeldachse55 des Laserempfängers 22 |
| untere Kanten 17c und 17d | Laserstrahlachse in neuer Lage 56 |
| Austrittsfläche 18 | |
| zweite Reflexionsfläche 19 | |
| Lasersender 21 | |
| Laserempfänger 22 | |
| Umlenkprisma 23 | Umlenkprisma 90 |
| Laserstrahl 24 | Zwischenbildebene Z |

## Patentansprüche

1. Binokulares Fernglas,
mit zwei Tubussen in denen jeweils ein Prismensystem zur Bildumkehr eines jeweiligen visuellen Beobachtungsstrahlengangs angeordnet ist,
wobei ein Lasersender (21) mit ausgehendem Laserstrahlengang (24) im ersten Tubus (3a) und ein zugeordneter Laserempfänger (22) mit ankommendem Laserstrahlengang (24) im zweiten Tubus (3b) mittels einen Knickbrücke (37) parallel zueinander im Abstand veränderbar sind,
wobei eines der beiden Prismen (9, 10) des jeweiligen Prismensystems (6) mit einer Teilerschicht (12, 12', 12") ausgebildet oder mit einer Teilerschicht (12, 12', 12") über eine Kittschicht verbunden ist, zur Aufspaltung des im jeweiligen Tubus (3a, 3b) teilweise gemeinsam verlaufenden visuellen Beobachtungsstrahlengangs (7) und Laserstrahlengangs (24) in separate Strahlengänge,
**dadurch gekennzeichnet,**
**dass** die zwei Tubusse über die Knickbrücke miteinander verbunden sind,
**dass** das jeweilige Prismensystem als ein aus einem Gleichschenkelprisma und einem mit diesem benachbarten Dachkantprisma bestehendes Abbe-König-Prismensystem ausgebildet ist,
**dass** im jeweiligen Tubus (3) das Abbe-König-Prismensystem (6) zwischen einem zugeordneten Objektiv (8) und einem zugeordneten Okular (11) angeordnet ist und der entsprechende visuelle Beobachtungsstrahlengang (7) vom Objektiv (8) durch beide Prismen (9, 10) des Abbe-König-Prismensystems (6) zum Okular (11) verläuft und
**dass** der Lasersendestrahl (24) im ersten Tubus (3a) durch eines oder beide Prismen (9, 10) und durch das Objektiv (8) zu einem Objekt (4) hin verläuft und der Laserempfangsstrahl (24) in dem zweiten Tubus (3b) vom Objektiv (8) durch eines oder beide Prismen (9, 10) zum Laserempfänger (22) hin verläuft.

2. Binokulares Fernglas nach Anspruch 1, **dadurch gekennzeichnet, dass** der Lasersender (21) als Laserdiode und/oder der Laserempfänger (22) als Photodiode ausgebildet ist.

3. Binokulares Fernglas nach Anspruch 1 oder 2, **dadurch gekennzeichnet, dass** zur Erlangung einer Teilerschicht (12,12") eines der Prismen (9, 10) aus zwei miteinander verkitteten Teilprismen (9a, 9b; 10a, 10b) aufgebaut ist, wobei die Trennfläche mit einer Beschichtung, insbesondere einer dielektrischen Beschichtung versehen ist, zur Aufspaltung des im jeweiligen Tubus (3a, 3b) teilweise gemeinsam verlaufenden visuellen Beobachtungsstrahlengangs (7) und Laserstrahlengangs (24) in separate Strahlengänge durch Reflexion eines definierten Wellenlängenbereichs.

4. Binokulares Fernglas nach Anspruch 3, **dadurch gekennzeichnet, dass** die Teilerschicht (12) in dem Gleichschenkelprisma (9) oder in dem Dachkantprisma (10) angeordnet ist.

5. Binokulares Fernglas nach einem der Ansprüche 1 oder 2, **dadurch gekennzeichnet, dass** zur Erlangung einer Teilerschicht (12') die Reflexionsfläche des Gleichschenkelprismas (9) als Kontaktfläche ausgebildet ist, die mit einer Kontaktfläche eines Umlenkprismas (90) verkittet ist, wobei zumindest eine der beiden Kontaktflächen mit einer Beschichtung, insbesondere einer dielektrischen Beschichtung versehen ist, zur Aufspaltung des im jeweiligen Tubus (3a, 3b) teilweise gemeinsam verlaufenden visuellen Beobachtungsstrahlengangs (7) und Laserstrahlengangs (24) in separate Strahlengänge durch Reflexion eines definierten Wellenlängenbereichs.

6. Binokulares Fernglas nach einem der vorangehenden Ansprüche, **dadurch gekennzeichnet, dass** das Abbe-König-Prismensystem (6) für achsnahe Laserstrahlenbündel (24) ausgebildet ist, insbesondere für Laserstrahlenbündel (24), die mit der optischen Achse (29) einen Winkel von ≤ 0,3° einschließen.

7. Binokulares Fernglas nach einem der vorangehenden Ansprüche, **dadurch gekennzeichnet, dass** das Gleichschenkelprisma (9) an der Kopffläche als Duzchtrittsfläche (28) des Laserstrahlengangs (24) mit einem Umlenkprisma (23) verkittet ist, zur Umlenkung des Laserstrahlengangs (24) über zumindest eine Reflexionsfläche (26) vom Lasersender (21) weg oder zum Laserempfänger (22) hin.

8. Binokulares Fernglas nach einem der vorangehenden Ansprüche, **dadurch gekennzeichnet, dass** das Gleichschenkelprisma (9) an der Basisfläche (14) mit einem Umlenkprisma (90) verkittet ist.

9. Binokulares Fernglas nach einem der vorangehenden Ansprüche, **dadurch gekennzeichnet, dass** die benachbarten Prismen (9) und (10) miteinander verkittet, angesprengt oder mit einem Luftabstand von 0 bis 5 mm, vorzugsweise 0,5 bis 2 mm angeordnet sind.

## Claims

1. Binoculars having two tubes in which a prism system is arranged in each case for the image inversion of a respective visual observation beam path,
it being possible for a laser transmitter (21) having an outgoing laser beam path (24) in the first tube (3a), and an assigned laser receiver (22) having an incoming laser beam path (24) in the second tube (3b) to be varied in the spacing parallel to one another by means of a folding bridge (37),
one of the two prisms (9, 10) of the respective prism system (6) being designed with a splitter layer (12, 12', 12") or connected to a splitter layer (12, 12', 12") via a cement layer for the purpose of splitting into separate beam paths the visual observation beam path (7) and laser beam path (24) which run partially in common in the respective tube (3a, 3b),
**characterized**
**in that** the two tubes are interconnected via the folding bridge,
**in that** the respective prism system is designed as an Abbe-König prism system consisting of an isosceles prism and a roof prism adjacent to the latter,
**in that** the Abbe-König prism system (6) is arranged in the respective tube (3) between an assigned objective (8) and an assigned eyepiece (11), and the corresponding visual observation beam path (7) runs to the eyepiece (11) from the objective (8) through both prisms (9, 10) of the Abbe-König prism system (6), and in that the emitting laser beam (24) in the first tube (3a) runs to an object (4) through one or both prisms (9, 10) and through the objective (8), and the received laser beam (24) in the second tube (3b) runs to the laser receiver (22) from the objective (8) through one or both prisms (9, 10).

2. Binoculars according to Claim 1, **characterized in that** the laser transmitter (21) is designed as a laser diode, and/or the laser receiver (22) is designed as a photodiode.

3. Binoculars according to Claim 1 or 2, **characterized in that** in order to achieve a splitter layer (12, 12") one of the prisms (9, 10) is constructed from sub-prisms (9a, 9b; 10a, 10b) cemented to one another, the separation surface being provided with a coating, in particular a dielectric coating, for the purpose of splitting into separate beam paths the visual observation beam path (7) and laser beam path (24) which run partially in common in the respective tube (3a, 3b) by reflecting a defined wavelength region.

4. Binoculars according to Claim 3, **characterized in that** the splitter layer (12) is arranged in the isosceles prism (9) or in the roof prism (10).

5. Binoculars according to either of Claims 1 and 2, **characterized in that** in order to achieve a splitter layer (12') the reflection surface of the isosceles prism (9) is designed as a contact surface which is cemented to a contact surface of a deflecting prism (90), at least one of the two contact surfaces being provided with a coating, in particular a dielectric coating, for the purpose of splitting into separate beam paths the visual observation beam path (7) and laser beam path (24) which run partially in common in the respective tube (3a, 3b) by reflecting a defined wavelength region.

6. Binoculars according to one of the preceding claims, **characterized in that** the Abbe-König prism system (6) is designed for axially close laser beams (24), in particular for laser beams (24) which enclose an angle of ≤ 0.3° with the optical axis (29).

7. Binoculars according to one of the preceding claims, **characterized in that** the isosceles prism (9) is cemented on the top surface as transmission surface (28) of the laser beam path (24) to a deflecting prism (23) for deflecting the laser beam path (24) away from the laser transmitter (21) or towards the laser receiver (22) via at least one reflection surface (26).

8. Binoculars according to one of the preceding claims, **characterized in that** the isosceles prism (9) is cemented on the base surface (14) to a deflecting prism (90).

9. Binoculars according to one of the preceding claims, **characterized in that** the adjacent prisms (9) and (10) are arranged in a fashion cemented to one another, wrung or with an air space of 0 to 5 mm, preferably 0.5 to 2 mm.

## Revendications

1. Jumelles binoculaires, avec deux tubes dans chacun desquels est disposé un système de prismes pour retourner l'image d'un chemin optique d'observation visuel correspondant,
dans lesquelles il est possible de modifier parallèlement la distance mutuelle d'un émetteur laser (21) avec le chemin optique laser (24) qui en sort dans le premier tube (3a) et un récepteur laser (22) associé avec le chemin optique laser (24) qui y arrive dans le deuxième tube (3b) au moyen d'un pont pliable (37), dans lesquelles un des deux prismes (9, 10) du système de prismes correspondant (6) est développé avec une couche séparatrice (12, 12', 12") ou est relié à une couche séparatrice (12, 12', 12") par l'intermédiaire d'une couche de collage, pour scinder dans des chemins optiques séparés, le chemin optique d'observation visuel (7) et le chemin optique laser (24) se propageant partiellement en commun dans le tube correspondant (3a, 3b),
**caractérisées**
**en ce que** les deux tubes sont reliés l'un à l'autre par l'intermédiaire du pont pliable,
**en ce que** le système de prismes correspondant est développé sous la forme d'un système de prismes d'Abbe-König constitué d'un prisme à côtés égaux et d'un prisme en toit voisin,
**en ce que** dans le tube (3) correspondant, le système de prismes d'Abbe-König (6) est disposé entre un objectif associé (8) et un oculaire associé (11) et que le chemin optique d'observation visuel (7) correspondant se propage de l'objectif (8) à travers les deux prismes (9, 10) du système de prismes d'Abbe-König (6) vers l'oculaire (11) et
**en ce que** le rayon d'émission laser (24) se propage dans le premier tube (3a) à travers un ou les deux prismes (9, 10) et à travers l'objectif (8) vers un objet (4) et que le rayon de réception laser (24) se propage dans le deuxième tube (3b) à travers un ou les deux prismes (9, 10) à partir de l'objectif (8) vers le récepteur laser (22).

2. Jumelles binoculaires selon la revendication 1, **caractérisées en ce que** l'émetteur laser (21) est développé sous la forme d'une diode laser et/ou le récepteur laser (22) sous la forme d'une photodiode.

3. Jumelles binoculaires selon la revendication 1 ou 2, **caractérisées en ce que** pour l'obtention d'une couche séparatrice (12, 12"), un des prismes (9, 10) est construit à partir de deux prismes partiels (9a, 9b ; 10a, 10b) collés l'un à l'autre, dans lesquelles la surface séparatrice est pourvue d'un revêtement, notamment un revêtement diélectrique pour scinder dans des chemins optiques séparés par réflexion d'une plage définie de longueurs d'ondes, le chemin optique d'observation visuel (7) et le chemin optique laser (24) se propageant partiellement en commun dans le tube correspondant (3a, 3b).

4. Jumelles binoculaires selon la revendication 3, **caractérisées en ce que** la couche séparatrice (12) est disposée dans le prisme à côtés égaux (9) ou dans le prisme en toit (10).

5. Jumelles binoculaires selon une des revendications 1 ou 2, **caractérisées en ce que** pour l'obtention d'une couche séparatrice (12'), la surface de réflexion du prisme à côtés égaux (9) est développée sous la forme d'une surface de contact qui est collée à la surface de contact d'un prisme de déviation (90), dans lesquelles une au moins des deux surfaces de contact est pourvue d'un revêtement, notamment un revêtement diélectrique pour scinder dans des chemins optiques séparés par réflexion d'une plage définie de longueurs d'ondes, le chemin optique d'observation visuel (7) et le chemin optique laser (24) se propageant partiellement en commun dans le tube correspondant (3a, 3b).

6. Jumelles binoculaires selon une des revendications précédentes, **caractérisées en ce que** le système de prismes d'Abbe-König (6) est développé pour des faisceaux de rayons lasers proches de l'axe (24), notamment pour des faisceaux de rayons laser (24) formant un angle de ≤0,3° avec l'axe optique (29).

7. Jumelles binoculaires selon une des revendications précédentes, **caractérisées en ce que** la surface supérieure du prisme à côtés égaux (9) est collée à un prisme de déviation (23) sous la forme d'une surface traversée (28) du chemin optique du laser (24) pour dévier le chemin optique du laser (24) par l'intermédiaire d'au moins une surface de réflexion (26) à partir du chemin de l'émetteur laser (21) ou vers le récepteur laser (22).

8. Jumelles binoculaires selon une des revendications précédentes, **caractérisées en ce que** le prisme à côtés égaux (9) est collé à la surface de base (14) avec un prisme de déviation (90).

9. Jumelles binoculaires selon une des revendications précédentes, **caractérisées en ce que** les prismes voisins (9) et (10) sont collés l'un à l'autre, appliqués l'un contre ou disposés avec un espace d'air de 0 à 5 mm, de préférence 0,5 à 2 mm.
